# EUROPEAN PATENT APPLICATION

(11) **EP 2 857 871 A1**
(43) Date of publication of application: **08.04.2015**
(21) Application number: 13797049.7
(22) Date of filing: 17.05.2013
(51) Int. Cl.: G02B 1/11, B32B 7/02

(54) **ANTIREFLECTION FILM, OPTICAL SYSTEM, OPTICAL DEVICE AND METHOD FOR FORMING ANTIREFLECTION FILM**

(30) Priority: 30.05.2012 JP 2012122734
(71) Applicant: Olympus Corporation, Shibuya-ku Tokyo 151-0072 (JP)
(72) Inventor: KOYAMA, Masanori, Shibuya-ku, Tokyo 1510072 (JP); HOSAKAWA, Kazuyuki, Shibuya-ku, Tokyo 1510072 (JP)
(74) Representative: Kuhnen & Wacker
(86) International application number: PCT/JP2013/063784
(87) International publication number: WO 2013/179914

(57) **Abstract**

There is provided an antireflection coating having a band ranging from visible light to infrared (wavelength range from 400 nm to 1600 nm). The antireflection coating includes twelve layers formed by depositing a high refractive index material and a low refractive index material having a refractive index lower than the high refractive index material alternately and depositing an ultra-low refractive index material having a refractive index lower than the low refractive index material as the outermost layer. The first, third, fifth, seventh, ninth, and eleventh layers are formed by depositing the high refractive index material, the second, fourth, sixth, eighth, and tenth layers are formed by depositing the low refractive index material, and the twelfth layer is formed by depositing the ultra-low refractive index material, where the layers are numbered in order from the substrate side.

## Description

### TECHNICAL FIELD

The present invention relates to an antireflection coating, an optical system having the antireflection coating, and an optical apparatus having the optical system, and a method of forming an antireflection coating.

### BACKGROUND ART

In recent years, applications of fluorescence microscopes have been increasing in the fields of medical care and chemistry. In the fluorescence microscopes, giving a reagent containing a fluorescent protein to an object to be observed such as a cell and irradiating the object with light of a certain wavelength causes emission of fluorescent light having a different wavelength from the reagent by excitation. The object can be observed with this fluorescent light. An example of the fluorescence microscope is a multiphoton microscope.

The multiphoton microscope uses high order laser light, e.g. second-order laser light as excitation light in order to achieve high power output. It is preferred that the wavelength of laser used to excite visible light be in the infrared range.

Therefore, it is necessary for the optical system in the multiphoton microscope to transmit fluorescent light (visible light) for observation and near infrared light as excitation laser light for generating the fluorescent light. For this reason, an antireflection coating transmitting visible light and near infrared light is needed. As the excitation light, the laser light needs to have a wavelength approximately twice the fluorescent observation wavelength. In fluorescent observation, the wavelength used for observation is determined by the reagent used. Since the wavelength of the visible light used is approximately 500 nm, it is preferred that the antireflection coating transmit light in the wavelength range from visible light to near infrared light (approximately 1000 nm).

As common antireflection coatings, coatings having a three-layer structure that transmit visible light (in the wavelength range from 400 nm to 600 nm) have been known. Patent literature 1 discloses an antireflection coating that transmits only near infrared light not including visible light. On the other hand, in cases where visible light is used, it is necessary to block light in the near infrared range. For such purpose, antireflection coatings that characteristically transmit visible light and reflect light in the near infrared range have been developed, as disclosed in patent literature 2. As an antireflection coating for visible light and near infrared light, an antireflection coating that transmits light in the wavelength range from 400 nm through 1100 nm is disclosed in patent literature 3.

### CITATION LIST

### PATENT LITERATURE

Patent Literature 1: Japanese Patent Application Laid-Open No. 2005-275294
Patent Literature 2: Japanese Patent Application Laid-Open No. 9-325211
Patent Literature 3: Japanese Patent Application Laid-Open No. 2005-338366

### SUMMARY OF INVENTION

### TECHNICAL PROBLEM

Multiphoton microscopes enable observation of not only the surface of an object to be observed but also the inside thereof. When observing the inside of an object to be observed using a multiphoton microscope, using laser light having longer wavelengths is effective in enabling observation of a deep portion of the object. Taking into consideration absorption of light by the atmosphere, it is desirable that laser light having a long wavelength up to 1600 nm can be used. In other words, it is desirable that a transmission band covering a wavelength range from 400 nm through 1600 nm be achieved. Therefore, in conventional multiphoton microscopes, the objective lens used for observation needs to have an antireflection coating for a wavelength range from 400 nm to 1600 nm.

As described above, the antireflection coating described in patent document 1 can transmit only one of visible light and near infrared light. The antireflection coating described in patent document 3 does not have a sufficiently large transmission band width, and its reflectance is 7% at the wavelength of 1350 nm and 16% at the wavelength of 1600 nm, which are higher than those of the lens and substrate. Therefore, it cannot serve as an antireflection coating.

The present invention has been made in view of the above-description circumstances, and its object is to provide an antireflection coating having a band ranging from visible light to infrared (a wavelength range from 400 nm to 1600 nm).

### SOLUTION TO PROBLEM

An antireflection coating according to the present invention, which is intended to solve the above-described problems, is characterized by comprising twelve layers that are formed by depositing a high refractive index material and a low refractive index material having a refractive index lower than the high refractive index material alternately and depositing an ultra-low refractive index material having a refractive index lower than the low refractive index material as the outermost layer.

An optical system according to the present invention is characterized by comprising one or more optical substrates having the above-described antireflection coating.

An optical apparatus according to the present invention is characterized by comprising the above-described optical system.

A method of forming an antireflection coating according to the present invention is characterized by comprising a first film formation step of depositing a high refractive index material and a low refractive index material having a refractive index lower than the high refractive index material alternately on a substrate, and a second film formation step of depositing an ultra-low refractive index material having a refractive index lower than the low refractive index material by wet coating to form an outermost layer.

### ADVANTAGEOUS EFFECTS OF INVENTION

The present invention can provide an antireflection coating having a band ranging from visible light to infrared (wavelength range from 400 nm to 1600 nm)

With the structure having an outermost layer formed by wet coating and the other dielectric layers formed by deposition, an antireflection coating having a reflectance equal to or lower than 1% throughout the wavelength range between 400 nm and 1600 nm can be achieved. Forming this antireflection coating on an optical component allows the use of laser beams having longer wavelengths as excitation light, enabling observation of deeper portions in observation of the inside of an object to be observed.

### BRIEF DESCRIPTION OF DRAWINGS

Fig. 1 is a diagram showing the basic construction of a multiphoton microscope as an embodiment of the present invention;
Fig. 2 is a table specifying the layer structure of antireflection coatings according to examples 1, 2, 3, and 4;
Fig. 3 is a table specifying the highest reflectances of the antireflection coatings according to examples 1, 2, 3, and 4;
Fig. 4 is a graph showing reflectance characteristics of the antireflection coating according to example 1;
Fig. 5 is a graph showing reflectance characteristics of the antireflection coating according to example 2;
Fig. 6 is a graph showing reflectance characteristics of the antireflection coating according to example 3;
Fig. 7 is a graph showing reflectance characteristics of the antireflection coating according to example 4;
Fig. 8 is a table specifying the layer structure of antireflection coatings according to examples 5 and 6;
Fig. 9 is a table specifying the highest reflectances of the antireflection coatings according to examples 5 and 6;
Fig. 10 is a graph showing reflectance characteristics of the antireflection coating according to example 5;
Fig. 11 is a graph showing reflectance characteristics of the antireflection coating according to example 6;
Fig. 12 is a table specifying the layer structure of antireflection coatings according to examples 7 and 8;
Fig. 13 is a table specifying the highest reflectances of the antireflection coatings according to examples 7 and 8;
Fig. 14 is a graph showing reflectance characteristics of the antireflection coating according to example 7;
Fig. 15 is a graph showing reflectance characteristics of the antireflection coating according to example 8.

### DESCRIPTION OF EMBODIMENTS

In the following, embodiments of the antireflection coating, the optical system having the antireflection coating, the optical apparatus having the optical system, and the method of forming an antireflection coating according to the present invention will be described in detail with reference to the drawings. The present invention is not limited by the following embodiments.

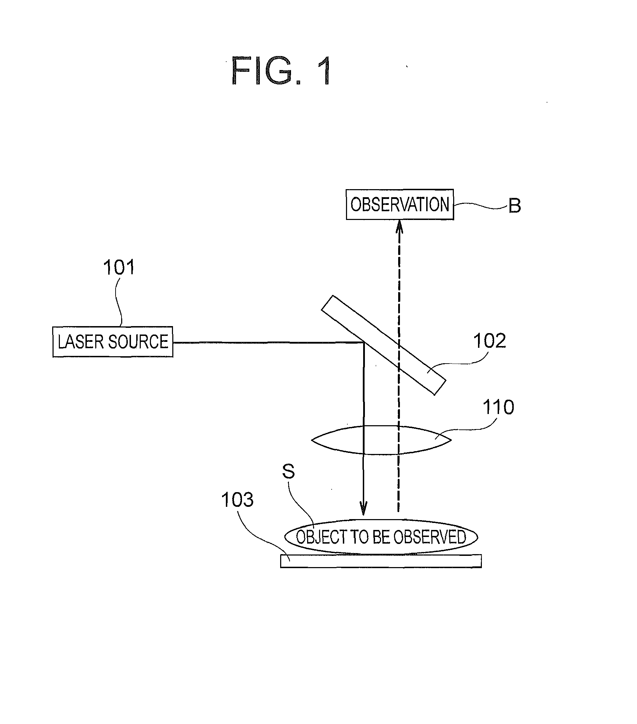

Fig. 1 is a diagram showing the basic construction of a multiphoton microscope as an embodiment of the optical apparatus according to the present invention.

In the multiphoton microscope shown in Fig. 1, short pulse laser light generated by a laser source 101 is reflected by a multilayer filter 102 and delivered to an object S to be observed set on an observation table 103 through an optical system 110. Light generated in the object S to be observed by irradiation with the laser light is transmitted through the multilayer filter 102 to allow observation by an observer B.

The optical system 110 has an antireflection coating to have a reflectance equal to or lower than 1% for light in the wavelength range from 400 nm through 1600 nm.

This antireflection coating is composed of twelve layers deposited in order on a substrate. The twelfth layer most distant from the substrate (i.e. outermost layer) is an ultra-low refractive index layer, whose main constituent is hollow silica. This layer is formed by wet coating. As the method of wet coating, spin coating, dipping, spraying, ink jet, or slit water may be employed. The refractive index of the ultra-low refractive index layer formed by wet coating may be set to a desired value between 1.20 and 1.29.

The first to eleventh layers are formed a dielectric multilayer film by depositing dielectric films in order. The first to eleventh layers are formed by, for example, vacuum deposition, IAD (Ion Assisted Deposition), plasma assisted deposition, sputtering, or ion beam sputtering (first film formation step). After forming these layers, an ultra-low refractive index material is deposited on the eleventh layer (second film formation step).

The optical system in the multiphoton microscope according to this embodiment is suitable for use in the objective lens for a multiphoton microscope. Further, it may also be applied to a lens, prism, and filter in an optical apparatus such as a camera, eye glasses, and telescope.

In the following, the construction, operation, and advantages of the antireflection coating according to the embodiment of the present invention will be described.

The antireflection coating according to the embodiment of the present invention is characterized by including twelve layers that are formed by depositing a high refractive index material and a low refractive index material having a refractive index lower than the high refractive index material alternately and depositing an ultra-low refractive index material having a refractive index lower than the low refractive index material as the outermost layer.

In the antireflection coating according to the embodiment of the present invention, it is preferred that the first, third, fifth, seventh, ninth, and eleventh layers be formed by depositing the high refractive index material, the second, fourth, sixth, eighth, and tenth layers be formed by depositing the low refractive index material, and the twelfth layer be formed by depositing the ultra-low refractive index material, where the layers are numbered in order from the substrate side.

In the antireflection coating according to the embodiment of the present invention, it is preferred that the optical film thickness of the eleventh layer counted from the substrate side be equal to or smaller than 4 percent of the overall optical film thickness of the antireflection coating.

In the antireflection coating according to the embodiment of the present invention, it is preferred that the optical film thickness nd, which is expressed as the product of the refractive index n and the physical film thickness d, of the layers satisfy the following conditions respectively:
1st layer: 0.02 < nd < 0.11,
2nd layer: 0.03 < nd < 0.22,
3rd layer: 0.06 < nd < 0.26,
4th layer: 0.03 < nd < 0.18,
5th layer: 0.09 < nd < 0.32,
6th layer: 0.02 < nd < 0.16,
7th layer: 0.10 < nd < 0.73,
8th layer: 0.05 < nd < 0.17,
9th layer: 0.06 < nd < 0.15,
10th layer: 0.16 < nd < 0.27,
11th layer: 0.02 < nd < 0.06, and
12th layer: 0.32 < nd < 0.39.

If the optical film thicknesses nd of the respective layers do not satisfy the above conditions, it is difficult to achieve a reflectance equal to or lower than 1% for light in the wavelength range between 400 nm and 1600 nm.

In the antireflection coating according to the embodiment of the present invention, it is preferred that the high refractive index material be TiO₂, Ta₂O₅, HfO₂, Nb₂O₅, or a mixture of at least one of these materials with La or Zr and that the low refractive index material be SiO₂, MgF₂, or a mixture of SiO₂ and MgF₂.

In the antiref lection coating according to the embodiment of the present invention, it is preferred that the refractive index of the ultra-low refractive index material be in the range between 1.20 and 1.29.

If the refractive index is lower than 1.20, it is difficult to select a usable material. If the refractive index is higher than 1.29, it is difficult to achieve a reflectance equal to or lower than 1% for light in the wavelength range between 400 nm and 1600 nm.

In the antiref lection coating according to the embodiment of the present invention, it is preferred that the refractive index of the substrate be in the range between 1.44 and 1.88.

If the refractive index of the substrate falls out of the range between 1.44 and 1.88, it is difficult to achieve a reflectance equal to or lower than 1% for light in the wavelength range between 400 nm and 1600 nm.

In the antireflection coating according to the embodiment of the present invention, it is preferred that the coating layer of the ultra-low refractive index material be formed by wet coating.

An optical system according to an embodiment of the present invention is characterized by including one or more optical substrates having one of the above-described antireflection coatings.

An optical apparatus according to an embodiment of the present invention is characterized by including the above-mentioned optical system.

A method of forming an antireflection coating according to an embodiment of the present invention is characterized by including a first film formation step of depositing a high refractive index material and a low refractive index material having a refractive index lower than the high refractive index material alternately on a substrate and a second film formation step of depositing an ultra-low refractive index material having a refractive index lower than the low refractive index material by wet coating to form an outermost layer.

In the method of forming an antireflection coating according to the embodiment of the present invention, it is preferred that coating layers be formed by vacuum deposition, IAD, plasma assisted deposition, sputtering, or ion beam sputtering in the first film formation step.

In the following, examples of the antireflection coating according to the embodiment of the present invention will be described.

### (Examples 1 to 4)

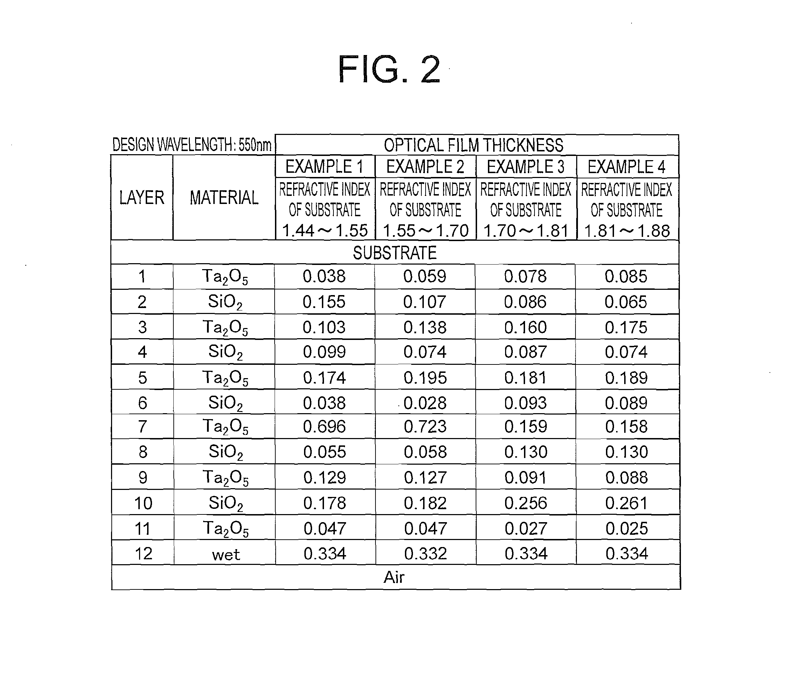

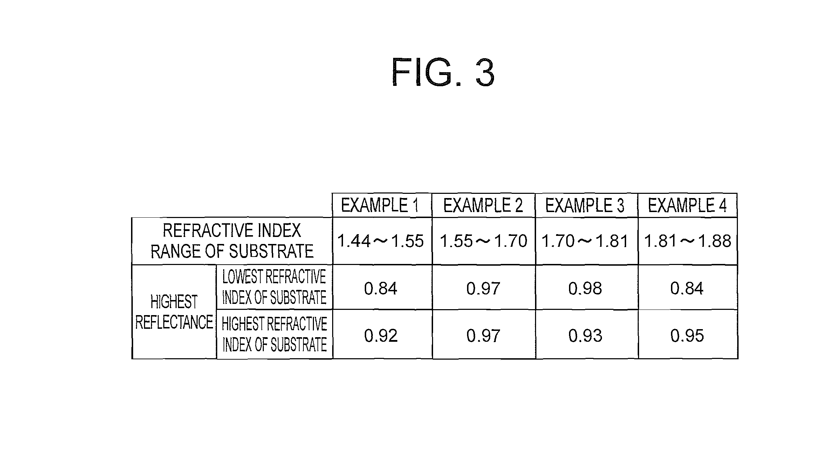

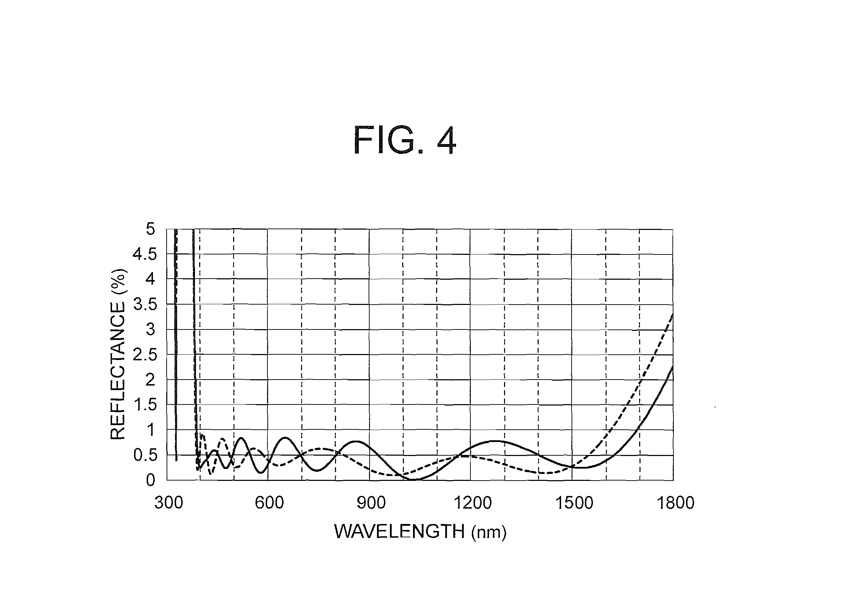

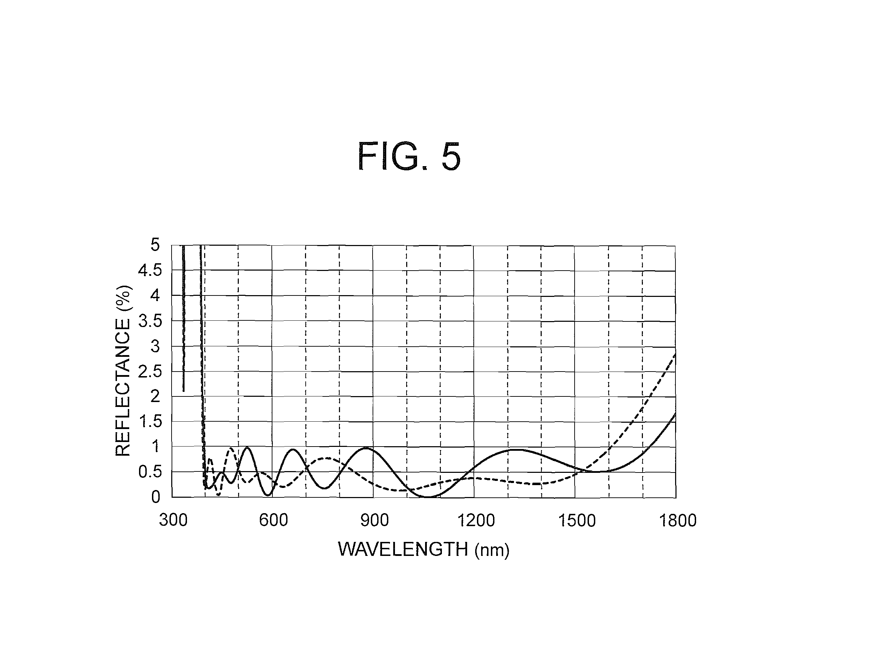

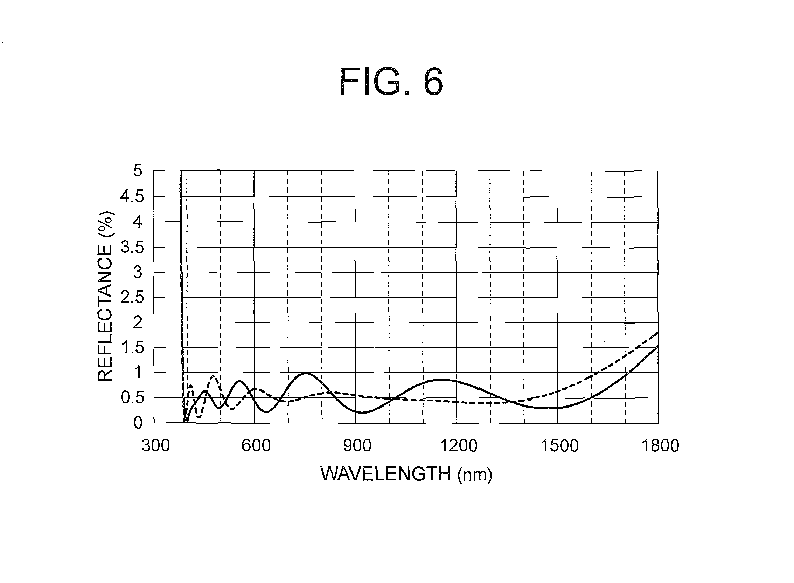

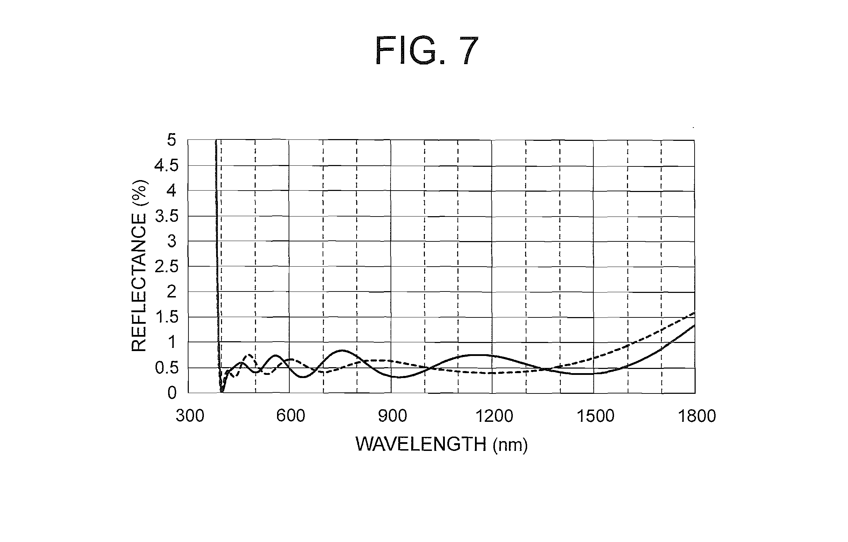

Fig. 2 is a table specifying the layer structure of antireflection coatings according to examples 1, 2, 3, and 4. Fig. 3 is a table specifying the highest reflectances of the antireflection coatings according to examples 1, 2, 3, and 4. Fig. 4 is a graph showing reflectance characteristics of the antireflection coating according to example 1. Fig. 5 is a graph showing reflectance characteristics of the antireflection coating according to example 2. Fig. 6 is a graph showing reflectance characteristics of the antireflection coating according to example 3. Fig. 7 is a graph showing reflectance characteristics of the antireflection coating according to example 4.

Fig. 2 specifies the optical film thickness of each of the layers at a design wavelength of 550 nm. The optical film thickness is equal to the product of the refractive index n and the physical film thickness d of each layer, and the optical film thickness equal to the quarter of the design wavelength is expressed to be equal to 0.25.

Fig. 3 specifies the highest reflectance for each of the case where the refractive index of the substrate is equal to the smallest value in the refractive index range of the substrate shown in Fig. 3 and the case where the refractive index of the substrate is equal to the largest value in the refractive index range. The values shown in Fig. 3 are the highest reflectances in the wavelength range from 400 nm through 1600 nm.

In Fig. 4, the solid curve represents the reflectance in the case where the refractive index n of the substrate is equal to 1.44, and the broken curve represents the reflectance in the case where the refractive index n of the substrate is equal to 1.55.

In Fig. 5, the solid curve represents the reflectance in the case where the refractive index n of the substrate is equal to 1.55, and the broken curve represents the reflectance in the case where the refractive index n of the substrate is equal to 1.70.

In Fig. 6, the solid curve represents the reflectance in the case where the refractive index n of the substrate is equal to 1.70, and the broken curve represents the reflectance in the case where the refractive index n of the substrate is equal to 1.81.

In Fig. 7, the solid curve represents the reflectance in the case where the refractive index n of the substrate is equal to 1.81, and the broken curve represents the reflectance in the case where the refractive index n of the substrate is equal to 1.88.

As shown in Fig. 2, each of the antireflection coatings of examples 1 to 4 is a multilayer film having twelve layers formed by depositing Ta₂O₅ (having a refractive index n of 2.22) as a high refractive index material and SiO₂ (having a refractive index n of 1.45) as a low refractive index material alternately to form eleven layers and further depositing an ultra-low refractive index material on the side distant from the substrate.

The layers of Ta₂O₅ as a high refractive index material are arranged as the first, third, fifth, seventh, ninth, and eleventh layers, which are high refractive index layers. Here, the layers are numbered in order from the substrate side. The layers of SiO₂ as a low refractive index material are arranged as the second, fourth, sixth, eighth, and tenth layers, which are low refractive index layers. The layer of the ultra-low refractive index material is arranged as the twelfth layer (or the outermost layer; ultra-low refractive index layer).

The optical film thickness, which is the product of the refractive index n and the physical film thickness d, of the layers in the multilayer film satisfies the following conditions respectively:
1st layer: 0.02 < nd < 0.11,
2nd layer: 0.03 < nd < 0.22,
3rd layer: 0.06 < nd < 0.26,
4th layer: 0.03 < nd < 0.18,
5th layer: 0.09 < nd < 0.32,
6th layer: 0.02 < nd < 0.16,
7th layer: 0.10 < nd < 0.73,
8th layer: 0.05 < nd < 0.17,
9th layer: 0.06 < nd < 0.15,
10th layer: 0.16 < nd < 0.27,
11th layer: 0.02 < nd < 0.06, and
12th layer: 0.32 < nd < 0.39.

### (Example 1)

As shown in Fig. 4, the reflectance of the antireflection coating of example 1 is lower than 1% throughout the wavelength range between 400 nm and 1600 nm in both the cases where the substrate has a refractive index of 1.44 and where the substrate has a refractive index of 1.55. This is also the case with any substrate having a refractive index in the range between 1.44 and 1.55.

Specifically, as shown in Fig. 3, in the case of the antireflection coating formed on the substrate having the lowest refractive index (n = 1.44), the highest reflectance is 0.84%. In the case of the antireflection coating formed on the substrate having the highest refractive index (n = 1.55), the highest reflectance is 0.92%. These highest reflectance values are not higher than 1%.

### (Example 2)

As shown in Fig. 5, the reflectance of the antireflection coating of example 2 is lower than 1% throughout the wavelength range between 400 nm and 1600 nm in both the cases where the substrate has a refractive index of 1.55 and where the substrate has a refractive index of 1.70. This is also the case with any substrate having a refractive index in the range between 1.55 and 1.70.

Specifically, as shown in Fig. 3, in the case of the antireflection coating formed on the substrate having the lowest refractive index (n = 1.55), the highest reflectance is 0.97%. In the case of the antireflection coating formed on the substrate having the highest refractive index (n = 1.70), the highest reflectance is 0.97%. These highest reflectance values are not higher than 1%.

### (Example 3)

As shown in Fig. 6, the reflectance of the antireflection coating of example 3 is lower than 1% throughout the wavelength range between 400 nm and 1600 nm in both the cases where the substrate has a refractive index of 1.70 and where the substrate has a refractive index of 1.81. This is also the case with any substrate having a refractive index in the range between 1.70 and 1.81.

Specifically, as shown in Fig. 3, in the case of the antireflection coating formed on the substrate having the lowest refractive index (n = 1.70), the highest reflectance is 0.98%. In the case of the antireflection coating formed on the substrate having the highest refractive index (n = 1.81), the highest reflectance is 0.93%. These highest reflectance values are not higher than 1%.

### (Example 4)

As shown in Fig. 7, the reflectance of the antireflection coating of example 4 is lower than 1% throughout the wavelength range between 400 nm and 1600 nm in both the cases where the substrate has a refractive index of 1.81 and where the substrate has a refractive index of 1.88. This is also the case with any substrate having a refractive index in the range between 1.81 and 1.88.

Specifically, as shown in Fig. 3, in the case of the antireflection coating formed on the substrate having the lowest refractive index (n = 1.81), the highest reflectance is 0.84%. In the case of the antireflection coating formed on the substrate having the highest refractive index (n = 1.88), the highest reflectance is 0.95%. These highest reflectance values are not higher than 1%.

### (Examples 5 and 6)

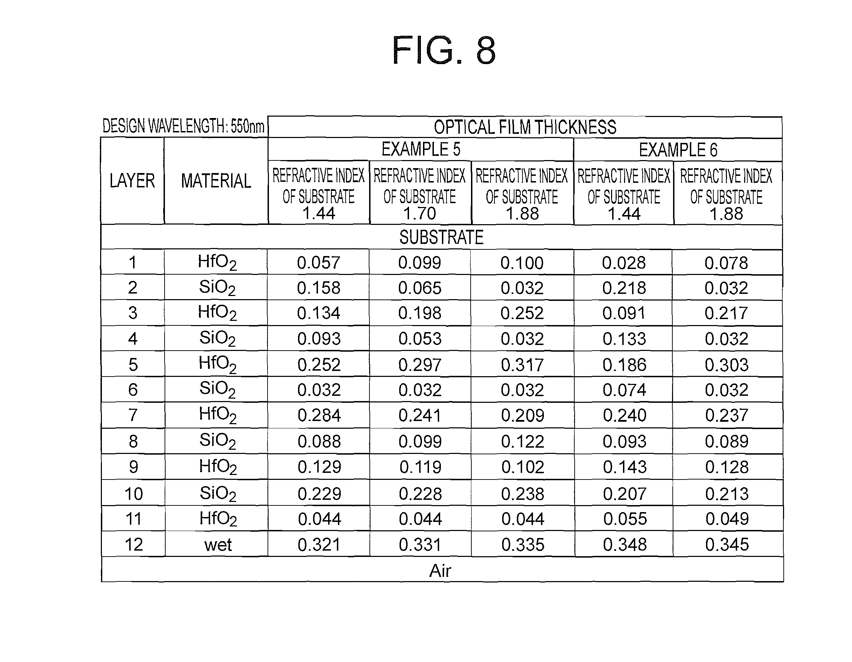

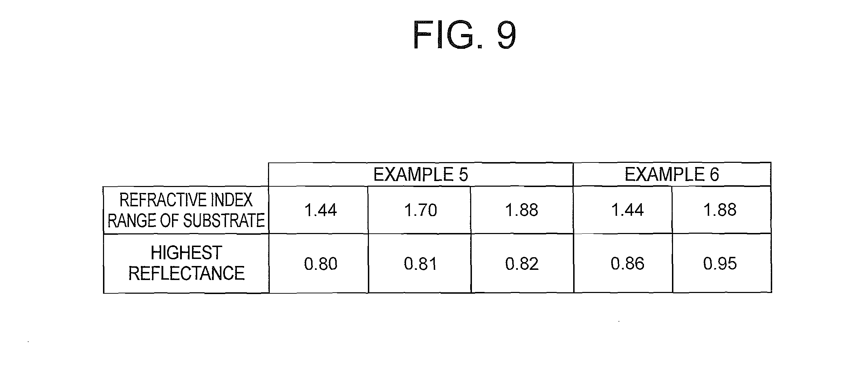

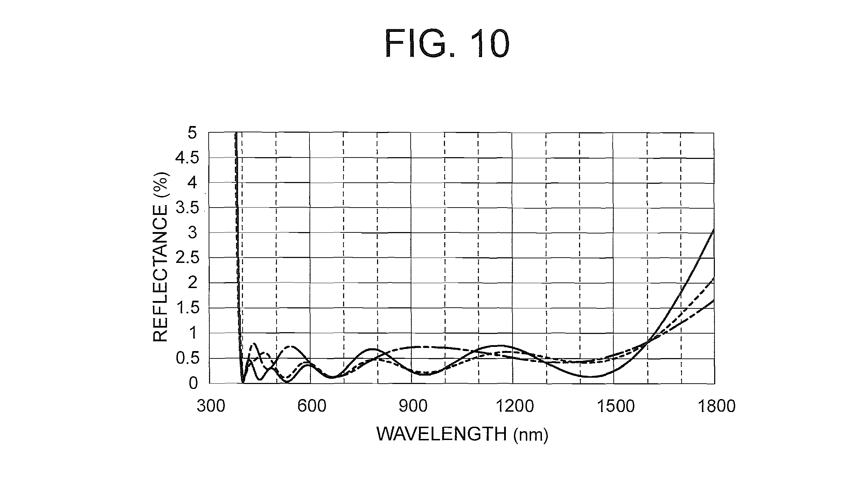

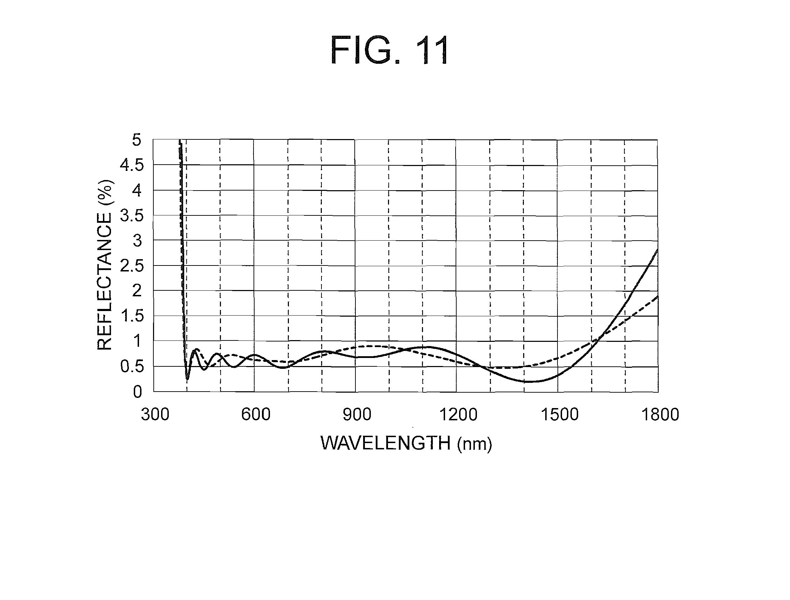

Fig. 8 is a table specifying the layer structure of antireflection coatings according to examples 5 and 6. Fig. 9 is a table specifying the highest reflectances of the antireflection coatings according to examples 5 and 6. Fig. 10 is a graph showing reflectance characteristics of the antireflection coating according to example 5. Fig. 11 is a graph showing reflectance characteristics of the antireflection coating according to example 6.

Fig. 8 specifies the optical film thickness of each of the layers at a design wavelength of 550 nm. The optical film thickness is equal to the product of the refractive index n and the physical film thickness d of each layer, and the optical film thickness equal to the quarter of the design wavelength is expressed to be equal to 0.25.

Fig. 9 specifies the highest reflectance for each of the case where the refractive index of the substrate is equal to the smallest value in the refractive index range of the substrate shown in Fig. 8 and the case where the refractive index of the substrate is equal to the largest value in the refractive index range. The values shown in Fig. 9 are the highest reflectances in the wavelength range from 400 nm through 1600 nm.

In Fig. 10, the solid curve represents the reflectance in the case where the refractive index n of the substrate is equal to 1.70, the broken curve represents the reflectance in the case where the refractive index n of the substrate is equal to 1.45, and the alternate long and short dashed curve represents the reflectance in the case where the refractive index n of the substrate is equal to 1.88.

In Fig. 11, the solid curve represents the reflectance in the case where the refractive index n of the substrate is equal to 1.44, and the broken curve represents the reflectance in the case where the refractive index n of the substrate is equal to 1.88.

As shown in Fig. 8, each of the antireflection coatings of examples 5 and 6 is a multilayer film having twelve layers formed by depositing HfO₂ (having a refractive index n of 1.99) as a high refractive index material and SiO₂ (having a refractive index n of 1.45) as a low refractive index material alternately to form eleven layers and further depositing an ultra-low refractive index material on the side distant from the substrate.

The layers of HfO₂ as a high refractive index material are arranged as the first, third, fifth, seventh, ninth, and eleventh layers, which are high refractive index layers. Here, the layers are numbered in order from the substrate side. The layers of SiO₂ as a low refractive index material are arranged as the second, fourth, sixth, eighth, and tenth layers, which are low refractive index layers. The layer of the ultra-low refractive index material is arranged as the twelfth layer (or the outermost layer; ultra-low refractive index layer).

The optical film thickness, which is the product of the refractive index n and the physical film thickness d, of the layers in the multilayer film satisfies the following conditions respectively:
1st layer: 0.02 < nd < 0.11,
2nd layer: 0.03 < nd < 0.22,
3rd layer: 0.06 < nd < 0.26,
4th layer: 0.03 < nd < 0.18,
5th layer: 0.09 < nd < 0.32,
6th layer: 0.02 < nd < 0.16,
7th layer: 0.10 < nd < 0.73,
8th layer: 0.05 < nd < 0.17,
9th layer: 0.06 < nd < 0.15,
10th layer: 0.16 < nd < 0.27,
11th layer: 0.02 < nd < 0.06, and
12th layer: 0.32 < nd < 0.39.

### (Example 5)

As shown in Fig. 10, the reflectance of the antireflection coating of example 5 is lower than 1% throughout the wavelength range between 400 nm and 1600 nm in all the cases where the substrate has a refractive index of 1.44, where the substrate has a refractive index of 1.70, and where the substrate has a refractive index of 1.88. This is also the case with any substrate having a refractive index in the range between 1.44 and 1.70 and in the range between 1.70 and 1.88.

Specifically, as shown in Fig. 9, in the case of the antireflection coating formed on the substrate having the lowest refractive index (n = 1.44), the highest reflectance is 0.80%. In the case of the antireflection coating formed on the substrate having an intermediate refractive index (n = 1.70), the highest reflectance is 0.81%. In the case of the antireflection coating formed on the substrate having the highest refractive index (n = 1.88), the highest reflectance is 0.82%. These highest reflectance values are not higher than 1%.

### (Example 6)

As shown in Fig. 11, the reflectance of the antireflection coating of example 6 is lower than 1% throughout the wavelength range between 400 nm and 1600 nm in both the cases where the substrate has a refractive index of 1.44 and where the substrate has a refractive index of 1.88. This is also the case with any substrate having a refractive index in the range between 1.44 and 1.88.

Specifically, as shown in Fig. 9, in the case of the antireflection coating formed on the substrate having the lowest refractive index (n = 1.44), the highest reflectance is 0.86%. In the case of the antireflection coating formed on the substrate having the highest refractive index (n = 1.88), the highest reflectance is 0.95%. These highest reflectance values are not higher than 1%.

### (Examples 7 and 8)

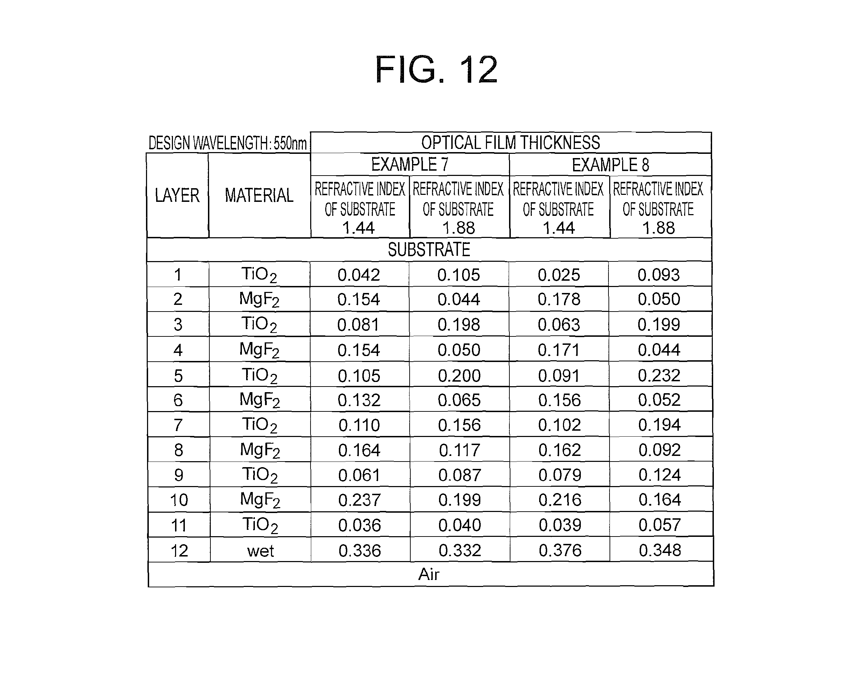

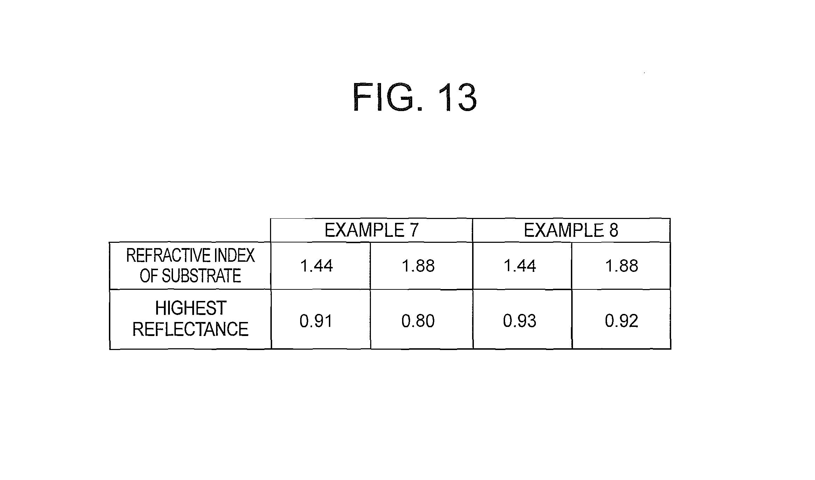

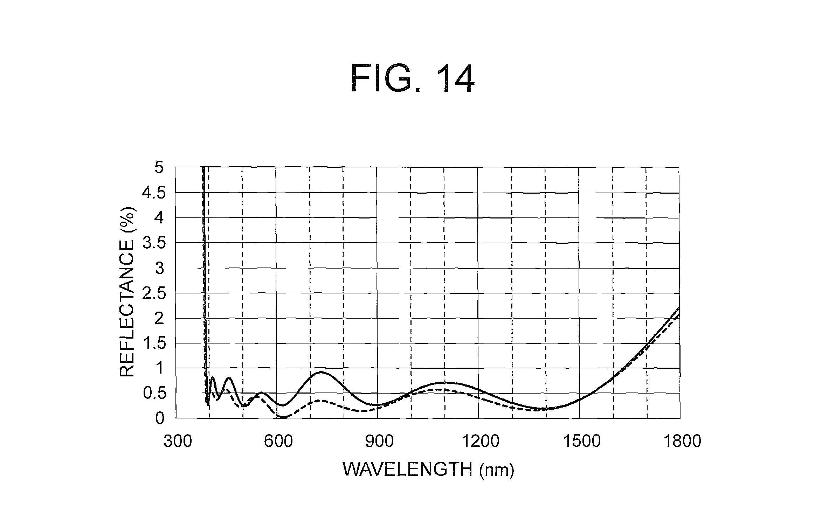

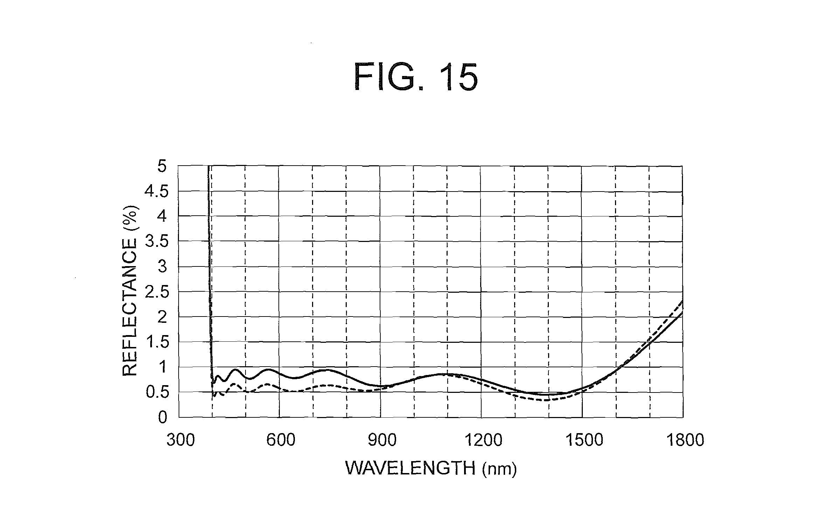

Fig. 12 is a table specifying the layer structure of antireflection coatings according to examples 7 and 8. Fig. 13 is a table specifying the highest reflectances of the antireflection coatings according to examples 7 and 8. Fig. 14 is a graph showing reflectance characteristics of the antireflection coating according to example 7. Fig. 15 is a graph showing reflectance characteristics of the antireflection coating according to example 8.

Fig. 12 specifies the optical film thickness of each of the layers at a design wavelength of 550 nm. The optical film thickness is equal to the product of the refractive index n and the physical film thickness d of each layer, and the optical film thickness equal to the quarter of the design wavelength is expressed to be equal to 0.25.

Fig. 13 specifies the highest reflectance for each of the case where the refractive index of the substrate is equal to the smallest value in the refractive index range of the substrate shown in Fig. 12 and the case where the refractive index of the substrate is equal to the largest value in the refractive index range. The values shown in Fig. 13 are the highest reflectances in the wavelength range from 400 nm through 1600 nm.

In Fig. 14, the solid curve represents the reflectance in the case where the refractive index n of the substrate is equal to 1.44, and the broken curve represents the reflectance in the case where the refractive index n of the substrate is equal to 1.88.

In Fig. 15, the solid curve represents the reflectance in the case where the refractive index n of the substrate is equal to 1.44, and the broken curve represents the reflectance in the case where the refractive index n of the substrate is equal to 1.88.

As shown in Fig. 12, each of the antireflection coatings of examples 7 and 8 is a multilayer film having twelve layers formed by depositing TiO₂ (having a refractive index n of 2.22) as a high refractive index material and MgF₂ (having a refractive index n of 1.38) as a low refractive index material alternately to form eleven layers and further depositing an ultra-low refractive index material on the side distant from the substrate.

The layers of TiO₂ as a high refractive index material are arranged as the first, third, fifth, seventh, ninth, and eleventh layers, which are high refractive index layers. Here, the layers are numbered in order from the substrate side. The layers of MgF₂ as a low refractive index material are arranged as the second, fourth, sixth, eighth, and tenth layers, which are low refractive index layers. The layer of the ultra-low refractive index material is arranged as the twelfth layer (or the outermost layer; ultra-low refractive index layer).

The optical film thickness, which is the product of the refractive index n and the physical film thickness d, of the layers in the multilayer film satisfies the following conditions respectively:
1st layer: 0.02 < nd < 0.11,
2nd layer: 0.03 < nd < 0.22,
3rd layer: 0.06 < nd < 0.26,
4th layer: 0.03 < nd < 0.18,
5th layer: 0.09 < nd < 0.32,
6th layer: 0.02 < nd < 0.16,
7th layer: 0.10 < nd < 0.73,
8th layer: 0.05 < nd < 0.17,
9th layer: 0.06 < nd < 0.15,
10th layer: 0.16 < nd < 0.27,
11th layer: 0.02 < nd < 0.06, and
12th layer: 0.32 < nd < 0.39.

### (Example 7)

As shown in Fig. 14, the reflectance of the antireflection coating of example 7 is lower than 1% throughout the wavelength range between 400 nm and 1600 nm in both the cases where the substrate has a refractive index of 1.44 and where the substrate has a refractive index of 1.88. This is also the case with any substrate having a refractive index in the range between 1.44 and 1.88.

Specifically, as shown in Fig. 13, in the case of the antireflection coating formed on the substrate having the lowest refractive index (n = 1.44), the highest reflectance is 0.91%. In the case of the antireflection coating formed on the substrate having the highest refractive index (n = 1.88), the highest reflectance is 0.80%. These highest reflectance values are not higher than 1%.

### (Example 8)

As shown in Fig. 15, the reflectance of the antireflection coating of example 8 is lower than 1% throughout the wavelength range between 400 nm and 1600 nm in both the cases where the substrate has a refractive index of 1.44 and where the substrate has a refractive index of 1.88. This is also the case with any substrate having a refractive index in the range between 1.44 and 1.88.

Specifically, as shown in Fig. 13, in the case of the antireflection coating formed on the substrate having the lowest refractive index (n = 1.44), the highest reflectance is 0.93%. In the case of the antireflection coating formed on the substrate having the highest refractive index (n = 1.88), the highest reflectance is 0.92%. These highest reflectance values are not higher than 1%.

### (Modification)

In the above-described examples 1 to 8, an additional layer may further be provided between the optical part and the first layer and/or on the outer side of the twelfth layer in order to enhance adhesiveness on the surface of the optical part and to enhance the repellency, antifogging, and durability of the outermost layer of the optical part with the antireflection coating, so long as optical characteristics thereof are not significantly affected. For example, overcoat of SiO₂ may be applied to the outer side of the twelfth layer.

### INDUSTRIAL APPLICABILITY

As described in the foregoing, the antireflection coating according to the present invention is useful for multiphoton microscopes in which the objective lens needs to have antireflection coating for the wavelength range from visible light to infrared.

### REFERENCE SIGNS LIST

- 101:: laser source
- 102:: multilayer filter
- 103:: observation table
- 110:: optical system
- S:: object to be observed

## Claims

1. An antireflection coating **characterized by** comprising twelve layers that are formed by depositing a high refractive index material and a low refractive index material having a refractive index lower than the high refractive index material alternately and depositing an ultra-low refractive index material having a refractive index lower than the low refractive index material as an outermost layer.

2. An antireflection coating according to claim 1, **characterized in that** the first, third, fifth, seventh, ninth, and eleventh layers are formed by depositing the high refractive index material, the second, fourth, sixth, eighth, and tenth layers are formed by depositing the low refractive index material, and the twelfth layer is formed by depositing the ultra-low refractive index material, the layers being numbered in order from the substrate side.

3. An antireflection coating according to claim 1, **characterized in that** the optical film thickness of the eleventh layer counted from the substrate side is equal to or smaller than 4 percent of the overall optical film thickness of the antireflection coating.

4. An antireflection coating according to claim 2, **characterized in that** the optical film thickness nd, which is expressed as the product of the refractive index n and the physical film thickness d, of the layers satisfy the following conditions respectively:
1st layer: 0.02 < nd < 0.11,
2nd layer: 0.03 < nd < 0.22,
3rd layer: 0.06 < nd < 0.26,
4th layer: 0.03 < nd < 0.18,
5th layer: 0.09 < nd < 0.32,
6th layer: 0.02 < nd < 0.16,
7th layer: 0.10 < nd < 0.73,
8th layer: 0.05 < nd < 0.17,
9th layer: 0.06 < nd < 0.15,
10th layer: 0.16 < nd < 0.27,
11th layer: 0.02 < nd < 0.06, and
12th layer: 0.32 < nd < 0.39.

5. An antireflection coating according to any one of claims 1 to 4, **characterized in that** the high refractive index material is TiO₂, Ta₂O₅, HfO₂, Nb₂O₅, or a mixture of at least one of these materials with La or Zr and that the low refractive index material is SiO₂, MgF₂, or a mixture of SiO₂ and MgF₂.

6. An antireflection coating according to any one of claims 1 to 5, **characterized in that** the refractive index of the ultra-low refractive index material is in the range between 1.20 and 1.29.

7. An antireflection coating according to any one of claims 1 to 6, **characterized in that** the refractive index of the substrate is in the range between 1.44 and 1.88.

8. An antireflection coating according to any one of claims 1 to 7, **characterized in that** the layer of the ultra-low refractive index material is formed by wet coating.

9. An optical system **characterized by** comprising one or more optical substrates having an antireflection coating according to any one of claims 1 to 7.

10. An optical apparatus **characterized by** comprising an optical system according to claim 9.

11. A method of forming an antireflection coating **characterized by** comprising:
a first film formation step of depositing a high refractive index material and a low refractive index material having a refractive index lower than the high refractive index material alternately on a substrate; and
a second film formation step of depositing an ultra-low refractive index material having a refractive index lower than the low refractive index material by wet coating to form an outermost layer.

12. A method of forming an antireflection coating according to claim 11, **characterized in that** in the first film formation step, coating layers are formed by vacuum deposition, IAD, plasma assisted deposition, sputtering, or ion beam sputtering.
